# EUROPÄISCHE PATENTANMELDUNG

(11) **EP 1 089 008 A2**
(43) Veröffentlichungstag der Anmeldung: **04.04.2001**
(21) Anmeldenummer: 00120606.9
(22) Anmeldetag: 21.09.2000
(51) Int. Cl.: F16D 65/20

(54) **Kolben für einen Zylinder und Verfahren zur Herstellung desselben**

(30) Priorität: 28.09.1999 DE 29917061 U
(71) Anmelder: HEINRICH BAUMGARTEN KG SPEZIALFABRIK FÜR BESCHLAGTEILE, 57290 Neunkirchen (DE)
(72) Erfinder: Fischbach, Wolfgang, 56567 Daaden (DE)
(74) Vertreter: Missling, Arne, Dipl.-Ing.

(57) **Zusammenfassung**

Die Erfindung betrifft einen Kolben für einen Zylinder, insbesondere Bremskolben für einen Bremszylinder, aus einem Kunststoff.

Ein derartiger Kolben soll dahingehend verbessert werden, dass der Kolben nicht durch Abrieb beschädigt wird und außerdem kostengünstig in den vorgeschriebenen Toleranzen herstellbar ist. Außerdem soll ein Kontakt der Hydraulikflüssigkeit mit dem Kunststoff des Kolbens verhindert werden.

Dieses wird dadurch erreicht, dass der Kolben (1) mit einem Topf (2) aus Metall versehen ist, der die Mantelfläche des Kolbens (1) zumindest teilweise bedeckt und in Kontakt mit der Zylinderwandung bringbar ist.

## Beschreibung

Die Erfindung betrifft einen Kolben für einen Zylinder, insbesondere einen Bremskolben für einen Bremszylinder, aus einem einen Füllstoff enthaltenden Kunststoff.

Kolben aus Kunststoff sind verschiedentlich aus dem Stand der Technik bekannt. Derartige Kolben, insbesondere Bremskolben, müssen bei ihrem Einsatz oftmals hohe Drücke und hohe Temperaturen aushalten können. Um eine hohe Festigkeit und Wärmebeständigkeit zu erreichen, werden für die Kolben daher Kunststoffe verwendet, die einen bis zu 80 %-igen Anteil von Füllstoffen haben. Bei einem solchen Füllstoff kann es sich beispielsweise um Gesteinsmehl handeln. Nachteil eines solchen Kunststoffkolben ist aber, dass er von dem Zylinder verschlissen wird. Der Kolben kann dann nicht mehr dichtend an der Zylinderwand anliegen und die in dem Zylinder vorgesehene Hydraulikflüssigkeit tritt aus dem Zylinder aus.

Ein weiterer Nachteil eines solchen Kunststoffkolbens ist, dass ein Kunststoffkolben allenfalls mit einer Toleranz von 0,09 Millimetern gefertigt werden kann. Damit die Kolbenzylindereinheit jedoch einwandfrei funktionieren kann, darf maximal eine Abweichung von 0,015 Millimetern vorliegen. Damit ein Kunststoffkolben eingesetzt werden kann, muss dieser also nachgearbeitet werden, damit der notwendige Durchmesser erhalten wird. Ein weiterer Nachteil kann darin liegen, dass der Kunststoff des Kolbens mit der Hydraulikflüssigkeit und dem Kunststoff des Kolbens zu unvorhersehbaren chemisch-physikalischen Wechselwirkungen kommen kann, welche die Funktionstüchtigkeit des Kolbens beeinträchtigen können.

Der Erfindung liegt daher die Aufgabe zugrunde, einen Kolben vorzuschlagen, der nicht von der Zylinderwandung beschädigt wird, der kostengünstig in den vorgeschriebenen Toleranzen herstellbar ist und bei welchem ein Kontakt der Hydraulikflüssigkeit und dem Kunststoff verhindert ist. Eine weitere Aufgabe betrifft die passgenaue Herstellung des Kolbens.

Diese Aufgabe wird erfindungsgemäß dadurch gelöst, dass der Kolben mit einem Topf aus Metall versehen ist, die Mantelfläche des Kolbens zumindest teilweise bedeckt und in Kontakt mit der Zylinderwandung bringbar ist.

Der erfindungsgemäße mit einem Topf versehene Kolben erfüllt die beiden in der Aufgabe geforderten Ansprüche. Der Topf verhindert zum Einen einen direkten Kontakt zwischen dem Kunststoff des Kolbens und der Zylinderwandung, so dass der Kolben nicht beschädigt wird und zum Anderen kann der Topf mit einer solchen Genauigkeit in den Abmessungen gefertigt werden, dass der damit ausgestattete Kolben den geforderten Toleranzen genügt. Außerdem wird ein Kontakt zwischen dem Kunststoff des Kolbens und der Hydraulikflüssigkeit verhindert, wodurch eine physikalisch-chemische Wechselwirkung zwischen dem Kunststoff und der Hydraulikflüssigkeit ausgeschlossen ist.

Der Topf kann dabei erfindungsgemäß an der Mantelfläche des Kolbens angeklebt sein. Vorteilhaft sind dann in der Mantelfläche des Kolbens, in Richtung der Kolbenachsen verlaufende Nuten vorgesehen, welche Klebstoff aufnehmen können. Alternativ dazu kann der Topf auch durch einen bloßen Reib- und/oder Formschluss mit dem Kolben verbunden werden.

In einer vorteilhaften Ausführung weist der Kolben eine in Richtung der Kolbenachse verlaufende Bohrung auf. Erfindungsgemäß kann dann die Bohrung eine oder mehrere Hinterschneidungen haben. An diesen Hinterschneidungen können dann beispielsweise die Bremsbacken einer Bremsanlage befestigt werden. Die Hinterschneidungen können im Übrigen gemäß der Erfindung sich bis zum Boden der Bohrung erstrecken.

Die Bohrung in dem Kolben kann erfindungsgemäß aber auch eine Durchgangsbohrung sein. Dann kann die Durchgangsbohrung mit einem einsetzbaren Boden verschlossen sein.

Gemäß der Erfindung kann der Boden der Bohrung eine oder mehrere Ausnehmungen aufweisen. Dadurch kann Gewicht - falls die die Bohrungen bildenden Ausnehmungen bereits beim Spritzgießen eingeformt werden - und auch Material eingespart werden.

Der Boden des Topfes kann vorteilhaft an dem Boden der Bohrung anliegen.

Die Aufgabe betreffend die Herstellung eines erfindungsgemäßen Kolbens wird dadurch gelöst, dass zunächst ein topfförmiges Halbzeug geformt wird, dessen Außenabmessungen gleich oder etwas kleiner sind als die Außenabmessungen des herzustellenden Kolbens, dass danach das Halbzeug in ein Werkzeug eingesetzt wird, welches die äußere Kontur des herzustellenden Kolbens hat, dass danach in das topfförmige Halbzeug Kunststoff unter hohem Druck und ggf. hoher Temperatur gefüllt wird, wodurch ein Aufweiten des Halbzeuges auf die durch das Werkzeug vorgegebenen Außenabmessungen erfolgt, und dass schließlich der mit dem verfestigten Kunststoff gefüllte Topf aus dem Werkzeug genommen wird.

Das topfförmige Halbzeug, welches in seinen Außenabmessungen etwas kleiner ist als der fertige Kolben wird in ein Werkzeug eingesetzt. Dieses Werkzeug, vorteilhaft ein Spritzwerkzeug hat exakt die Maße, die der herzustellende Kolben aufweisen soll. Das Halbzeug wird unter hohem Druck mit dem Kunststoff gefüllt, wodurch die Wandungen des Halbzeuges solange nach außen gedrückt werden, bis diese an dem Werkzeug anliegen. Dadurch erhält der Topf exakt die gewünschte Außenkontur, während der Kunststoff des Kolbens spielfrei in dem Topf eingebracht ist. Ebenfalls wird eine nachträgliche Befestigung des Kunststoffs in dem Topf unnötig. Mit diesem Verfahren ist eine schnelle und rationelle Herstellung der Kolben möglich, wobei eine Nachbearbeitung aufgrund der genauen Fertigung entbehrlich ist.

Vorteilhaft ist der Topf mit einem Korrosionsschutz versehen oder besteht aus einem Edelstahl.

Anhand der Zeichnung sind verschiedene Ausführungsbeispiele des erfindungsgemäßen Kolbens beschrieben. Darin zeigt
- Fig. 1: einen erfindungsgemäßen Kolben mit angeklebtem Topf,
- Fig. 2: einen erfindungsgemäßen Kolben mit reib- und formschlüssig befestigtem Topf,
- Fig. 3: einen weiteren erfindungsgemäßen Kolben mit reib- und formschlüssig befestigtem Topf,
- Fig. 4: einen horizontalen Schnitt durch den erfindungsgemäßen Kolben gemäß Fig. 1,
- Fig. 5: einen erfindungsgemäßen Kolben mit einsetzbarem Boden,
- Fig. 6: einen erfindungsgemäßen Kolben mit Ausnehmungen in dem Boden der Bohrung,
- Fig. 7: einen erfindungsgemäßen Kolben mit Bohrungen zur Material- und Gewichtseinsparung,
- Fig. 8: einen weiteren erfindungsgemäßen Kolben und
- Fig. 9: ein Ausführungsbeispiel, welches nach dem erfindungsgemäßen Verfahren hergestellt ist.

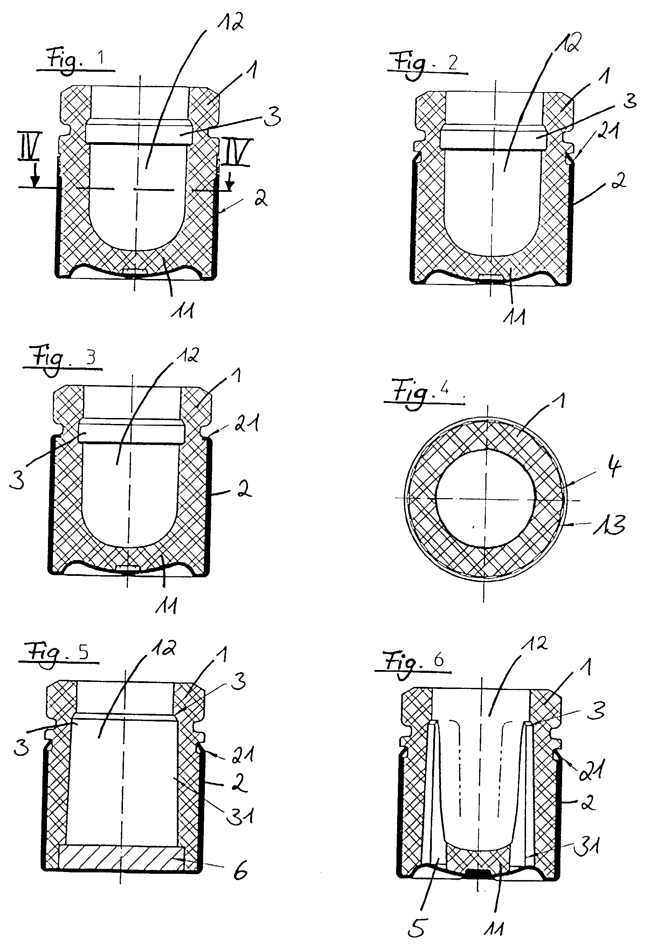

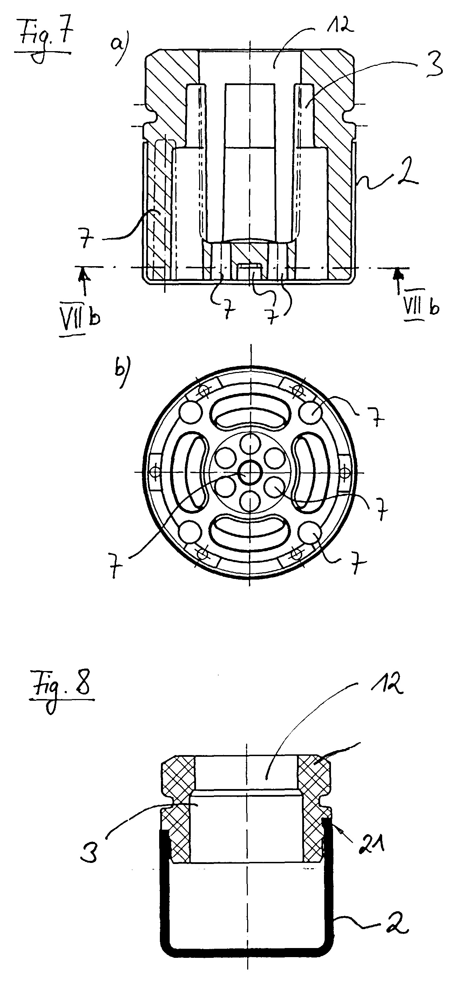

Die erfindungsgemäßen Kolben 1 der Fig. 1 bis 3 weisen eine in Richtung der Kolbenachse verlaufende Bohrung 12 auf. In die Wand der Bohrung 12 ist eine Hinterschneidung 3 vorgesehen. Die Hinterschneidung 3 ist als umlaufende Nut ausgeführt. Über den Kolben 1 ist außen ein Topf 2 gestülpt, welche mit einem Boden 23 verschlossen ist. Der Boden 23 des Topfes liegt dabei an dem Boden 11 der Bohrung 12 an.

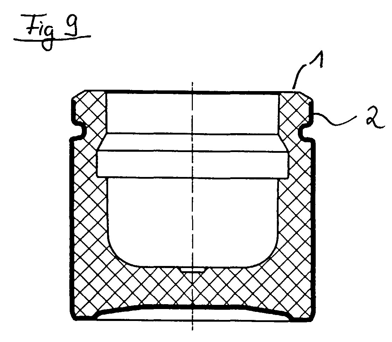

Das Ausführungsbeispiel gemäß Fig. 1 unterscheidet sich von den Ausführungsbeispielen 2 und 3 dadurch, dass hier der Topf außen auf die Mantelfläche 13 des Kolbens aufgeklebt ist. Die Mantelfläche 13 weist dazu in Richtung der Kolbenachse verlaufende Nuten auf, die überschüssigen Klebstoff 4 aufnehmen können (Fig. 4). Die Ausführungsbeispiele gemäß der Fig. 2 und 3 weisen dagegen einen Topf 2 auf, welche reib- und formschlüssig an dem Kolben 1 befestigt ist. Der Formschluss entsteht dabei jeweils an der Fügekante 21 des Kolbens 1 bzw. des Topfes 2.

Das Ausführungsbeispiel gemäß der Fig. 5 weist eine Durchgangsbohrung 12 auf. Die Durchgangsbohrung 12 ist dabei von einem Boden 6 verschlossen, welcher in die Durchgangsbohrung 12 eingesetzt ist. Die Durchgangsbohrung 12 ist ebenfalls mit einer Hinterschneidung 3 versehen, die bis zum Boden 6 verlängert ist. Der Topf 2 ist durch Reib- und Formschluss mit dem Kolben 1 verbunden. Das Ausführungsbeispiel gemäß Fig. 6 unterscheidet sich ebenfalls durch die Ausführung des Kolbens von den vorhergehenden. Der Boden der Bohrung 12 ist mit Ausnehmungen 5 versehen, welche abschnittsweise zu Hinterschneidungen 3, 31 in Richtung Öffnung der Bohrung 12 verlängert sind. Der Topf 2 ist im Übrigen, wie auch bei dem Ausführungsbeispiel zuvor, mittels Form- und Reibschluss an dem Kolben 1 befestigt.

Der in den Fig. 7a und 7b dargestellte Kolben 1 unterscheidet sich von dem Kolben gemäß Fig. 6 durch verschiedentlich in dem Kolben 1 vorgesehene Bohrungen 7. Diese Bohrungen 7 dienen der Gewichts- und Materialersparnis. Der Kolben 1 wird dadurch auf notwendiges Tragskelett reduziert, welches den Topf 2 hält.

In der Fig. 8 ist ein Kolben dargestellt, welcher im Vergleich zu den bisher beschriebenen Kolben eine kurze Bauform hat. Auf diesen Kolben 1 ist dann der Topf 2 aufgesetzt, welche den Kolben 1 verschließt. Der Topf sitzt dabei auf einem in dem Kolben eingeformten Absatz, wird jedoch nicht vollständig von dem Kolben ausgefüllt. Der Boden des Topfes liegt somit auch nicht an dem Kolben an. Durch diese Bauform kann erreicht werden, dass für die Herstellung des Kolbens wesentlich weniger Kunststoff verwendet wird. Dieses bedeutet eine Materialeinsparung, welche bei einem Massenartikel (wie beispielsweise einem Bremskolben) einen erheblichen wirtschaftlichen Vorteil bringt.

Der in der Fig. 9 dargestellte Kolben 1 wird in der Weise hergestellt, dass zunächst aus einem Metallblech ein topfförmiges Halbzeug tiefgezogen wird, welches Außenabmessungen hat, die etwas kleiner sind als die Außenabmessungen des fertigen Kolbens 1. Das Halbzeug ist in ein Werkzeug eingesetzt, welches die Außenkontur eines fertigen Kolbens hat. In dieses topfförmige Halbzeug wird dann unter hohem Druck und erhöhter Temperatur und Druck ein Kunststoff eingespritzt. Durch den hohen Druck, mit dem der Kunststoff in das Halbzeug eingespritzt wird, wird das Halbzeug aufgeweitet, so dass es schließlich an dem Werkzeug anliegt und die Kontur des fertigen Kolbens aufweist. Aufgrund des verfestigten Kunststoffes wird die Außenkontur des topfförmigen Halbzeuges stabilisiert, In der äußeren Kontur 13 kann eine Nut vorgesehen sein, welche zum Einen einer formschlüssigen Verbindung zwischen Topf 2 und Kolben 1 und zum Anderen als Befestigungsnut für Anbauteile dient. Das Halbzeug ist auf seiner Außenseite mit einem Überzug versehen, welcher eine Korrosion verhindert. Die Innenseite des Halbzeuges ist angerauht, so dass der eingespritzte Kunststoff an diesem anhaftet und eine innige Verbindung zwischen Topf 2 und Kolben 1 erzielt wird.

### Bezugszeichenliste:

- 1: - Kolben
- 11: - Boden der Bohrung
- 12: - Bohrung
- 13: - Topfwandung mit Nuten
-
- 2: - Topf
- 21: - Fügekante
- 23: - Topfboden
-
- 3: - Hinterschneidung
- 31: - verlängerte Hinterschneidung
-
- 4: - Klebstoff
-
- 5: - Ausnehmung im Boden der Bohrung
-
- 6: - Einsetzbarer Boden
-
- 7: - Bohrungen

## Patentansprüche

1. Kolben für einen Zylinder, insbesondere Bremskolben für einen Bremszylinder, aus einem Kunststoff,
**dadurch gekennzeichnet, dass**
der Kolben (1) mit einem Topf (2) aus Metall versehen ist, die die Mantelfläche des Kolbens (1) zumindest teilweise bedeckt und in Kontakt mit der Zylinderwandung bringbar ist.

2. Kolben nach Anspruch 1, dadurch gekennzeichnet, dass der Topf (2) an der Mantelfläche des Kolbens (1) haftet.

3. Kolben nach Anspruch 1 oder 2, dadurch gekennzeichnet, dass der Topf (2) an der Mantelfläche des Kolbens (1) angeklebt ist.

4. Kolben nach einem der Ansprüche 1 bis 3, dadurch gekennzeichnet, dass der Topf (2) aus Edelstahl besteht oder mit einem Korrosionsschutz versehen ist.

5. Kolben nach einem der Ansprüche 1 bis 4, dadurch gekennzeichnet, dass die Mantelfläche (13) des Kolbens (1) in Richtung der Kolbenachse verlaufende Nuten aufweist.

6. Kolben nach Anspruch 1, dadurch gekennzeichnet, dass der Topf (2) reib- und/oder formschlüssig mit dem Kolben (1) verbunden ist.

7. Kolben nach einem der Ansprüche 1 bis 6, dadurch gekennzeichnet, dass der Kolben (1) eine in Richtung der Kolbenachse verlaufende Bohrung (12) aufweist.

8. Kolben nach Anspruch 7, dadurch gekennzeichnet, dass die Wandung der Bohrung (12) eine oder mehrere Hinterschneidungen (3) aufweist.

9. Kolben nach Anspruch 8, dadurch gekennzeichnet, dass sich die Hinterschneidungen (31) bis zum Boden (11) der Bohrung (12) erstreckt.

10. Kolben nach Anspruch 7, dadurch gekennzeichnet, dass die Bohrung (12) eine Durchgangsbohrung ist und die Durchgangsbohrung mit einem einsetzbaren Boden (6) verschlossen ist.

11. Kolben nach einem der Ansprüche 9 und 10, dadurch gekennzeichnet, dass der Boden (6, 11) der Bohrung (23) eine oder mehrere Ausnehmungen (5) aufweist.

12. Kolben nach Anspruch 9 bis 11, dadurch gekennzeichnet, dass der Boden des Topfes (23) an dem Boden (6, 11) der Bohrung (12) anliegt.

13. Verfahren zur Herstellung eines Kolbens für einen Zylinder, insbesondere eines Bremskolbens für einen Bremszylinder, aus einem Kunststoff,
**dadurch gekennzeichnet, dass**
zunächst ein topfförmiges Halbzeug aus Metall geformt wird, dessen Außenabmessungen im Wesentlichen gleich oder etwas kleiner sind als die Außenabmessungen des herzustellenden Kolbens, dass danach das Halbzeug in ein Werkzeug eingesetzt wird, welches die äußere Kontur des herzustellenden Kolbens (2) hat, dass danach das topfförmige Halbzeug mit Kunststoff unter hohem Druck und ggf. hoher Temperatur gefüllt wird, wodurch das Halbzeug aufgeweitet wird und die durch das Werkzeug vorgegebenen Außenabmessungen erhält, und dass schließlich der mit dem verfestigten Kunststoff gefüllte Topf (23) aus dem Werkzeug entnommen wird.

14. Verfahren nach Anspruch 13, dadurch gekennzeichnet, dass der in das Halbzeug bzw. in den Topf (23) eingespritzte Kunststoff im Werkzeug unter Druck aushärtet.

15. Verfahren nach Anspruch 12 oder 13, dadurch gekennzeichnet, dass die mit dem Kunststoff in Kontakt kommende Oberfläche des Topfes (23) derart oberflächenbehandelt wird, dass der Kunststoff an dieser haftet.
